# EUROPEAN PATENT SPECIFICATION

(11) **EP 2 251 969 B1**
(45) Date of publication and mention of the grant of the patent: **05.10.2016**
(21) Application number: 10002375.3
(22) Date of filing: 08.03.2010
(51) Int. Cl.: H02M 7/483

(54) **Five-level inverter**
Fünfstufiger Umrichter
Onduleur à cinq niveaux

(30) Priority: 06.04.2009 JP 2009092276
(43) Date of publication of application: 17.11.2010
(73) Proprietor: Fuji Electric Co., Ltd., Kawasaki shi Kanagawa (JP)
(72) Inventor: Yatsu, Makoto, Kawasaki-shi 210-0856 (JP); Yoda, Kazuyuki, Tokyo 141-0032 (JP)
(74) Representative: Appelt, Christian W.

(56) References cited:
- EP-A1- 1 443 648
- WO-A2-03/005551
- JP-A- 2007 028 860
- GEORGE S. PERANTZAKIS ET AL: "A Novel Four-Level Voltage Source Inverter-Influence of Switching Strategies on the Distribution of Power Losses", IEEE TRANSACTIONS ON POWER ELECTRONICS, vol. 22, no. 1, 1 January 2007 (2007-01-01), pages 149-159, XP055232069, USA ISSN: 0885-8993, DOI: 10.1109/TPEL.2006.886627
- ALIAN CHEN ET AL: "A novel type of combined multilevel converter topologies", INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 3, 2 November 2004 (2004-11-02), pages 2290-2294, XP010799316, DOI: 10.1109/IECON.2004.1432157 ISBN: 978-0-7803-8730-0

## Description

### BACKGROUND OF THE INVENTION

### 1. Field of the Invention

The invention relates to a power converter, in particular to a five-level inverter that can directly output five voltage levels.

### 2. Description of the Related Field

FIG. 5 shows one phase of a five-level inverter disclosed, for example, in JP 2006-271042 A.

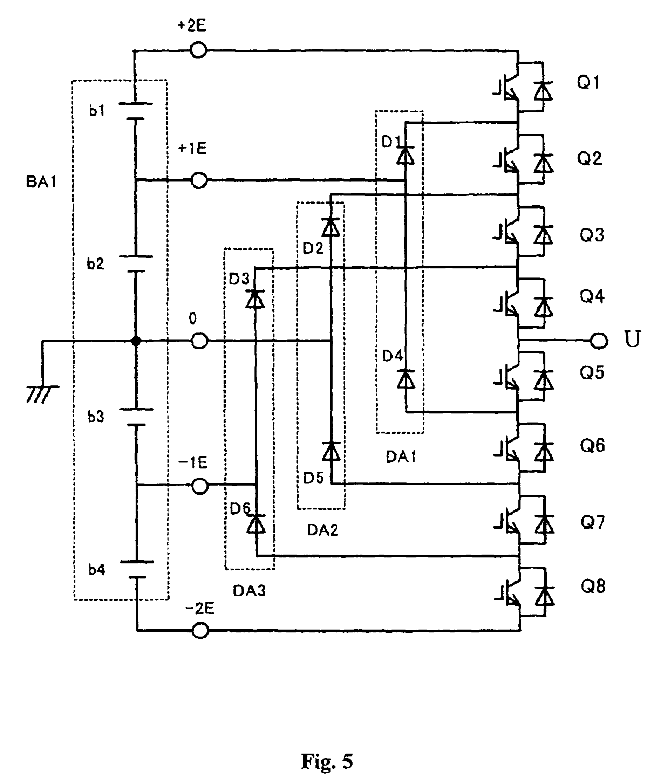

Referring to FIG. 5, a serial circuit of semiconductor switches Q1 to Q8 is connected between a positive electrode and a negative electrode of a DC battery BA1 connected in series to DC unit power sources b1 to b4, and the connection point of the semiconductor switches Q4 and Q5 serves as an AC output point U. An external terminal of a diode arm pair DA1 formed by diodes D1 and D4 is connected between the connection point of the semiconductor switches Q1 and Q2 and between the connection point of Q5 and Q6, and the midpoint terminal of the diode arm pair is connected to the connection point of the DC unit power sources b1 and b2. The external terminal of the arm pair as referred to herein is a general name used to distinguish this terminal from the midpoint terminal, and in some cases the external terminal is omitted.

Likewise, an external terminal of a diode arm pair DA2 formed by diodes D2 and D5 is connected between the connection point of the semiconductor switches Q2 and Q3 and between the connection point of Q6 and Q7, and the midpoint terminal of the diode arm pair is connected to the connection point of the DC unit power sources b2 and b3. An external terminal of a diode arm pair DA3 formed by diodes D3 and D6 is connected between the connection point of the semiconductor switches Q3 and Q4 and between the connection point of Q7 and Q8, and the midpoint terminal of the diode arm pair is connected to the connection point of the DC unit power sources b3 and b4.

In such a configuration, where the semiconductor switches Q1 to Q4 are ON and Q5 to Q8 are OFF, a voltage of a +2E level is outputted to the AC output terminal U, where the semiconductor switches Q2 to Q5 are ON and Q1, Q6 to Q8 are OFF, a voltage of a 1E level is outputted to the AC output terminal U, and where the semiconductor switches Q3 to Q6 are ON and Q1, Q2, Q7, and Q8 are OFF, a zero-level voltage is outputted to the AC output terminal U.

Likewise, where the semiconductor switches Q4 to Q7 are ON and Q1 to Q3 and Q8 are OFF, a voltage of a -1E level is outputted to the AC output terminal U, and where the semiconductor switches Q5 to Q8 are ON and Q1 to Q4 are OFF, a voltage of a -2E level is outputted to the AC output terminal U.

As described hereinabove, by ON-OFF regulating the semiconductor switches Q1 to Q8, it is possible to output voltages of five different levels (2E, 1E, 0, -1E, -2E) to the AC output terminal U.

However, in the configuration shown in FIG. 5, the maximum number of semiconductor switches that pass an output current (also simply referred to as "current") between the DC battery BA1 and the AC output terminal U is four. The resultant problem is that the stationary ON loss in the semiconductor switch becomes large, the efficiency of the entire device decreases, and the device is difficult to reduce in size and cost.

Accordingly, it is an object of the present invention to decrease the number of semiconductor switches that pass the electric current with respect to that in the conventional configuration, decrease the generated loss, and enable the reduction of the device is size and cost.

Document EP 1 443 648 A1 discloses a converter circuit for switching three voltage levels, with a DC circuit having two capacitors connected in series.

Document WO 03/005551 A2 discloses an N-point-converter connection comprising two electrically series-connected power converter valves each having interruptible semiconductor switches, and comprising a voltage intermediate circuit, which has electrically series-connected capacitors and which is connected in an electrically parallel manner to the direct voltage-side terminals of the series-connected power converter valves.

Document JP 2007-028860 A discloses a power-converting device. In the power-converting device, connection units, in which a plurality of switching devices comprising IGBTs and diodes connected inverse parallel are connected in series, are connected to both ends of two DC voltage source connected in series.

Document "A Novel Four-Level Voltage Source Inverter-Influence of Switching Strategies on the Distribution of Power Losses" (Perantzakis et al. IEEE Transactions on Power Electronics, vol. 22, no. 1, pages 149-159) discloses an inverter topology, which is composed of a conventional two-level and a three-level neutral-point clamped (NPC) inverter.

Document "A novel type of combined multilevel converter topologies" discloses combined multilevel converters combining a conventional diode clamped or flying capacitors multilevel converters with two-level bridge legs.

### SUMMARY OF THE INVENTION

In order to resolve the above-described problem, the invention as set forth in claim 1 provides a five-level inverter that is provided with quartered five terminals and can select and output any voltage level from an input DC power source having five mutually different voltage levels including zero, the inverter comprising:
first, second, and third arm pairs each being configured by combining in series two arms formed of semiconductor devices, and first and second AC switches configured by inverse serially combining the arms formed of semiconductor devices, wherein
the first arm pair is connected between a first DC terminal having the highest potential of the DC power source and a third DC terminal having an intermediate potential, the second arm pair is connected between the third DC terminal and a fifth DC terminal having the lowest potential, and the third arm pair is connected between the midpoint terminal of the first arm pair and the midpoint terminal of the second arm pair;
the first AC switch is connected between a second DC terminal having the second highest potential of the DC power source and the midpoint terminal of the first arm pair, the second AC switch is connected between a fourth DC terminal having the fourth highest potential of the DC power source and the midpoint terminal of the second arm pair, and the midpoint terminal of the third arm pair serves as an output terminal.
In the inverter according to the invention as set forth in claim 1, a configuration, in which arms formed of semiconductor devices are inverse serially combined, is replaced with a configuration, in which semiconductor devices with inverse withstand voltage are inverse parallel connected, as the first and second AC switches (invention as set forth in claim 2).

The invention as set forth in claim 3 provides a five-level inverter that is provided with quartered five terminals and can select and output any voltage level from an input DC power source having five mutually different voltage levels including zero, the inverter comprising:
first, second, third, and fourth arm pairs each being configured by combining in series two arms formed of semiconductor devices; and an AC switch configured by inverse serially combining the arms formed of semiconductor devices, wherein
the first arm pair is connected between a first DC terminal having the highest potential of the DC power source and a third DC terminal having an intermediate potential, the second arm pair is connected between the third DC terminal and a fifth DC terminal having the lowest potential, the third arm pair is connected between the midpoint terminal of the first arm pair and the midpoint terminal of the second arm pair, and the fourth arm pair is connected between a second DC terminal having the second highest potential of the DC power source and a fourth DC terminal having the fourth highest potential of the DC power source;
the AC switch is connected between a midpoint terminal of the fourth arm pair and a midpoint terminal of the third arm pair, and the midpoint terminal of the third arm pair serves as an output terminal.

In the inverter according to the invention as set forth in claim 3, a configuration, in which arms formed of semiconductor devices are inverse serially combined, is replaced with a configuration, in which semiconductor devices with inverse withstand voltage are inverse parallel connected, as the AC switch (invention as set forth in claim 4). In the inverter according to the invention as set forth in any one of claims 1 to 4, each of the arms constituting the first to third arm pairs is selectively ON-OFF switched and driven so that only voltages of two or less fractions, from among the quartered DC power source voltages, are applied during the operation of the arms (claim 5).

According to the invention, the maximum number of semiconductor switches through which a current passes between a DC power source serving as an input and an AC output is three. Therefore loss is reduced. As a result, the device is improved in efficiency and reduced in cost and size.

### BRIEF DESCRIPTION OF THE DRAWINGS

FIG. 1 is a circuit diagram illustrating an embodiment of the invention;
FIG. 2 is a circuit diagram illustrating a modification example of the configuration shown in FIG. 1;
FIG. 3 is a circuit diagram showing another embodiment of the invention;
FIG. 4 is a circuit diagram illustrating a modification example of the configuration shown in FIG. 3; and
FIG. 5 is a block diagram showing a conventional example of a five-level inverter.

### DESCRIPTION OF THE PREFERRED EMBODIMENTS

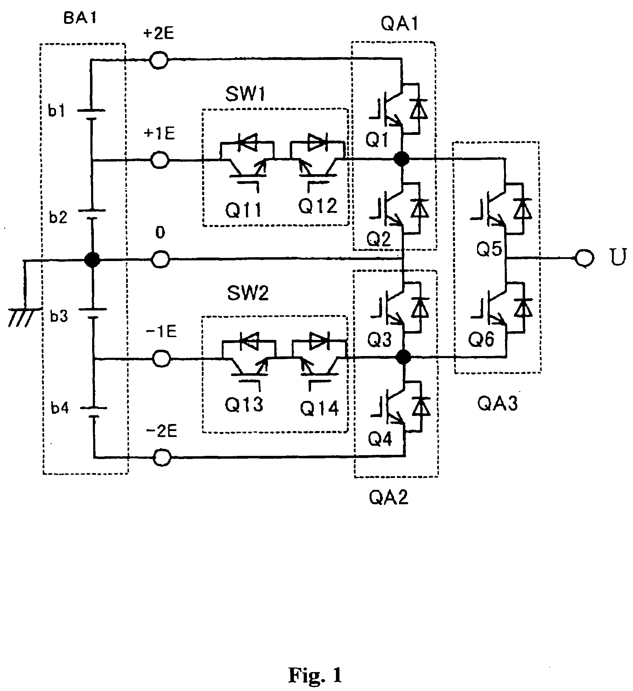

FIG. 1 is a circuit diagram illustrating an embodiment of the invention.

An external terminal of an arm pair QA1 composed of semiconductor switches Q1, Q2 is connected between a positive electrode and an intermediate (zero potential) terminal of a DC battery BA1 in which DC unit power sources b1 to b4, each having a 1E voltage, are connected in series, and an external terminal of an arm pair QA2 composed of Q3, Q4 is connected between the intermediate terminal and a negative electrode of the BA1.

Further, an external terminal of an arm pair QA3 composed of semiconductor switches Q5, Q6 is connected between the midpoint terminal of the arm pairs QA1 and QA2, and the midpoint terminal of the QA3 serves as an AC output terminal U. Further, an AC switch SW1 composed of semiconductor switches Q11, Q12 is connected between the connection point of the DC unit power sources b1 and b2 and the midpoint terminal of QA1, and an AC switch SW2 composed of semiconductor switches Q13, Q14 is connected between the connection point of the DC unit power sources b3 and b4 and the midpoint terminal of QA2.

In the above-described configuration, when the semiconductor switches Q1, Q5 are switched ON and Q2, Q6, and AC switch SW1 are switched OFF, a +2E voltage is outputted to the AC output terminal U. In this case, a current passes through two semiconductor switches Q1, Q5. Where Q4 and SW2 are further switched OFF, a voltage applied to the semiconductor switches that have been switched OFF in QA1 to QA3 is clamped to a maximum of 2E. Likewise, a voltage applied to the semiconductor switches that have been switched OFF in the AC switches SW1 and SW2 is clamped to 1E.

Where the AC switch SW1 and Q5 are switched ON and Q1, Q2, and Q6 are switched OFF, a +1E voltage is applied to the AC output terminal U. In this case a current passes through three semiconductor switches Q11, Q12, and Q5. Where Q4 is further also switched OFF, a voltage applied to the semiconductor switches that have been switched OFF in QA1 to QA3 is clamped to a maximum of 2E. Likewise, a voltage applied to the semiconductor switch that has been switched OFF in the AC switch SW2 is clamped to 1E.

Where Q2, Q5 or Q3, Q6 are switched On and Q1, Q4 and SW1, SW2 are switched OFF, a zero voltage is outputted to the AC output terminal U, and in this case an electric current passes through two semiconductor switches Q2, Q5 or Q3, Q6. A voltage applied to the semiconductor switch that has been switched OFF in QA1 to QA3 is clamped to a maximum 2E. Likewise, a voltage applied to the semiconductor switch that has been switched OFF in the AC switches SW1 and SW2 is clamped to 1E. Because of circuit symmetry, the operation of outputting -1E and -2E to the AC output point U is similar to that of outputting +1E, +2E, and the explanation thereof is omitted.

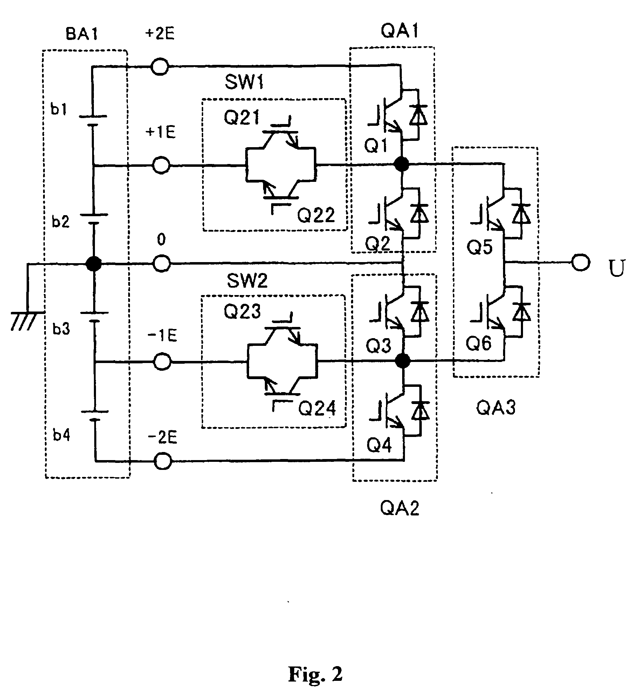

FIG. 2 shows a modification example of the configuration shown in FIG. 1. The difference between this configuration and that shown in FIG. 1 is that each inverse serial connection circuit of semiconductor switches Q11 and Q12, Q13 and Q14 constituting the AC switches SW1, SW2 is replaced with a corresponding inverse parallel circuit of respective reverse blocking IGBT Q21 and Q22, Q23 and Q24. With the configuration changed to the reverse blocking IGBT, the functions and action are not particularly different from those of the configuration with switches SW1, SW2 and the operation is identical to that of the configuration shown in FIG. 1.

However, when a current flows in the switches SW1, SW2, the current flows through two switches Q11, Q12 or Q13, Q14 in the circuit shown in FIG. 1, whereas in the circuit shown in FIG. 2, the current flows only through one switch, namely, Q21 or Q22, Q23 or Q24. As a result, the maximum number of semiconductor switches through which the electric current flows (including reverse blocking IGBT) is decreased from 3 to 2 and therefore an even higher efficiency can be obtained.

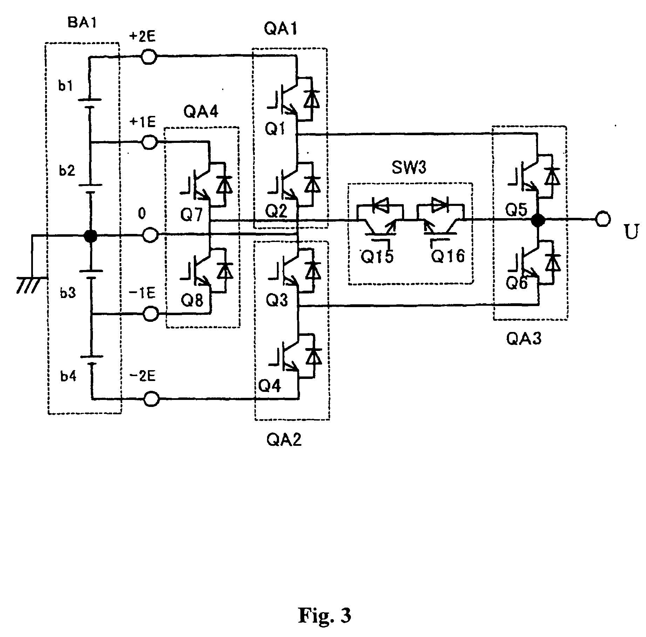

FIG. 3 is a circuit diagram showing another embodiment of the invention.

An external terminal of an arm pair QA1 composed of semiconductor switches Q1, Q2 is connected between a positive electrode and an intermediate terminal of a DC battery BA1 in which DC unit power sources b1 to b4, each having a 1E voltage, are connected in series, and an external terminal of an arm pair QA2 composed of Q3, Q4 is connected between the intermediate terminal and a negative electrode of the BA1.

Further, an external terminal of an arm pair QA3 composed of semiconductor switches Q5, Q6 is connected between the midpoint terminal of the arm pairs QA1 and QA2, and the midpoint terminal of the QA3 serves as an AC output terminal U. An external terminal of an arm pair QA4 composed of semiconductor switches Q7, Q8 is connected between the connection point of the DC unit power sources b1 and b2 and the connection point of b3 and b4, and an AC switch SW3 composed of semiconductor switches Q15, Q16 is connected between the midpoint points of the QA4 and QA3.

In such a configuration, where the semiconductor switches Q1, Q5 are switched ON and the Q2, Q6, and AC switch SW3 are switched OFF, a +2E voltage is outputted to the AC output terminal U, and in this case an electric current flows in two semiconductor switches Q1, Q5. Further, where Q4 and Q8 are also switched OFF, the voltage applied to the semiconductor switches that are switched OFF in QA1 to QA4 are clamped to a maximum 2E, and a voltage applied to a semiconductor switch that has been switched OFF in the AC switch SW3 is similarly clamped to 1E.

Where the AC switch SW3 and Q7 are switched ON and Q8, Q6, Q5, and Q2 are switched OFF, a +1E voltage is outputted to the AC output terminal U, and in this case a current flows in three semiconductor switches Q7, Q15, and Q16. Where Q4 is further also switched OFF, a voltage applied to the semiconductor switch that has been switched OFF in QA1 to QA4 is clamped to a maximum 2E.

Where Q2, Q5, or Q3, Q6 are switched ON and Q1, Q4 and Q7, Q8 are switched OFF, a zero voltage is outputted to the AC output terminal U, and in this case a current flows in two semiconductor switches Q2, Q5 or Q3, Q6. A voltage applied to the semiconductor switches that have been switched OFF in QA1 to QA4 is clamped to a maximum 2E.

Because of circuit symmetry, the operation of outputting -1E and -2E to the AC output point U is similar to that of outputting +1E, +2E, and the explanation thereof is omitted.

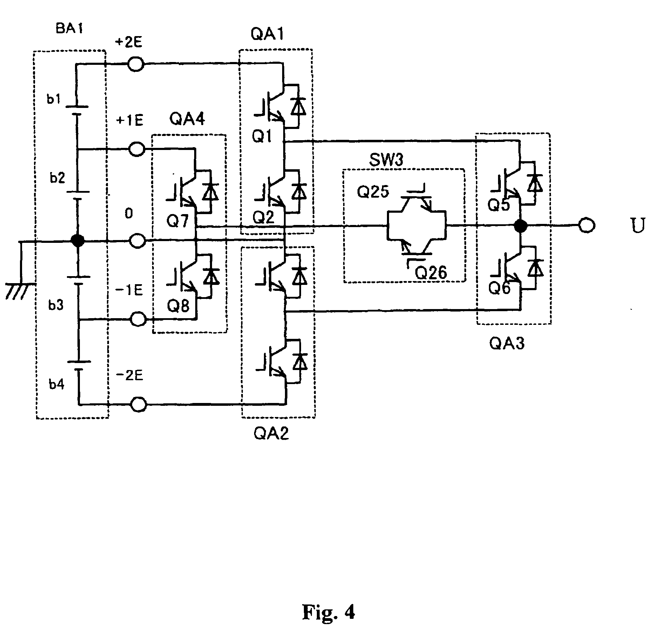

FIG. 4 shows a modification example of the configuration shown in FIG. 3. The difference between this configuration and that shown in FIG. 3 is that the inverted series connection circuit of semiconductor switches Q15 and Q16 constituting the AC switch SW3 is replaced with an inverted parallel circuit of Q25 and Q26 of reverse blocking IGBT. With the configuration changed to the reverse blocking IGBT, the functions and action are not particularly different from those of the configuration with the switch SW3 and the operation is identical to that of the configuration shown in FIG. 3.

However, when a current flows in the switch SW3, the current flows through two semiconductor switches Q15, Q16 in the circuit shown in FIG. 3, whereas in the circuit shown in FIG. 4, the current flows only through one switch, namely, Q25 or Q26. As a result, the maximum number of semiconductor switches through which the electric current flows (including reverse blocking IGBT) is decreased from 3 to 2 and therefore an even higher efficiency can be obtained.

In the circuits shown in FIGS. 1 to 4, for example, when a voltage of each DC unit power source b1 to b4 is 400 V and a voltage of the DC battery is BA1 is 1600 V, IGBT with a standard breakdown voltage of 1200 V can be applied to all the semiconductor switches Q1 to Q8, and IGBT or reverse blocking IGBT with a standard breakdown voltage of 600 V can be applied to the semiconductor switches Q11 to Q16 or reverse blocking IGBT Q21 to Q26. In this case, the output voltage of the AC output point U can be about AC 560 V as a phase voltage. Further, the above-described five-level inverters can be combined for three phases, and a voltage output of equal to or higher than AC 1000 V can be obtained when a trapezoidal wave modulation system with a three harmonic superposition is used.

## Claims

1. A five-level inverter that is provided with five DC terminals and can select and output any voltage level from an input DC power source (BA1) having five mutually different voltage levels (+2E, +1E, 0, -1E, -2E) including zero,
the inverter comprising:
first, second, and third arm pairs (QA1, QA2, QA3) each being configured by combining in series two arms (Q₁, Q₂; Q₃, Q₄; Q₅, Q₆) formed of semiconductor devices; wherein
the first arm pair (QA1) is connected between a first DC terminal (+2E) having the highest potential of the DC power source (BA1) and a third DC terminal (0) having an intermediate potential, the second arm pair (QA2) is connected between the third DC terminal (0) and a fifth DC terminal (-2E)having the lowest potential,
**characterized in that**
the third arm pair (QA3) is connected between a midpoint terminal of the first arm pair (QA1) and a midpoint terminal of the second arm pair (QA2), and a midpoint terminal of the third arm pair (QA3) serves as an output terminal (U), whereby the inverter further comprises
first and second AC switches (SW1, SW2) configured by inverse serially connecting semiconductor switches (Q₁₁, Q₁₂, Q₁₃, Q₁₄),
wherein the first AC switch (SW1) is connected between a second DC terminal (+1E) having the second highest potential of the DC power source and the midpoint terminal of the first arm pair (QA1) and the second AC switch (SW2) is connected between a fourth DC terminal (-1E) having the fourth highest potential of the DC power source (BA1) and the midpoint terminal of the second arm pair (QA2).

2. The five-level inverter according to claim 1, wherein a configuration, in which the semiconductor switches (Q₁₁, Q₁₂, Q₁₃, Q₁₄) are inverse serially combined, is replaced with a configuration, in which semiconductor devices (Q₂₁, Q₂₂, Q₂₃, Q₂₄) with inverse withstand voltage are inverse parallel connected, as the first and second AC switches (SW1, SW2).

3. A five-level inverter that is provided with five DC terminals and can select and output any voltage level from an input DC power source (BA1) having five mutually different voltage levels (+2E, +1E, 0, -1E, -2E) including zero,
the inverter comprising:
first, second, and thirdarm pairs (QA1, QA2, QA3) each being configured by combining in series two arms (Q₁, Q₂; Q₃, Q₄; Q₅, Q₆) formed of semiconductor devices, wherein
the first arm pair (QA1) is connected between a first DC terminal (+2E) having the highest potential of the DC power source (BA1) and a third DC terminal (0) having an intermediate potential, the second arm pair (QA2) is connected between the third DC terminal (0) and a fifth DC terminal (-2E) having the lowest potential,
**characterized in that**
the third arm pair (QA3) is connected between a midpoint terminal of the first arm pair (QA1) and a midpoint terminal of the second arm pair (QA2), and the midpoint terminal of the third arm pair (QA3) serves as an output terminal (U), whereby the inverter further comprises
a fourth arm pair (QA4) configured by combining in series two arms (Q₇, Q₈) formed of semiconductor devices, and the fourth arm pair (QA4) is connected between a second DC terminal (+1E) having the second highest potential of the DC power source (BA1) and a fourth DC terminal (-1E) having the fourth highest potential of the DC power source (BA1);
an AC switch (SW3) configured by inverse serially connecting semiconductor switches (Q₁₅, Q₁₆),
wherein the AC switch (SW3) is connected between a midpoint terminal of the fourth arm pair (QA4) and a midpoint terminal of the third arm pair (QA3).

4. The five-level inverter according to claim 3, wherein a configuration, in which the semiconductor devices (Q₁₅, Q₁₆) are inverse serially combined, is replaced with a configuration, in which semiconductor devices (Q₂₅, Q₂₆) with inverse withstand voltage are inverse parallel connected, as the AC switch (SW3).

5. The five-level inverter according to any one of claims 1 to 4, wherein each of the arms constituting the first to third arm pairs (QA1, QA2, QA3) is selectively ON-OFF switched and driven so that only voltages of two or less fractions, from among the DC power source voltages, are applied during the operation of the arms.

## Patentansprüche

1. Fünfstufiger Inverter, der mit fünf Gleichstromanschlüssen versehen ist und jeden Spannungspegel aus einer Eingangsgleichstromquelle (BA1) auswählen und ausgeben kann, die fünf voneinander verschiedene Spannungspegel (+2E, +1E, 0, -1E, -2E) einschließlich null aufweist,
wobei der Inverter Folgendes umfassend:
ein erstes, zweites und drittes Armpaar (QA1, QA2, QA3), von denen jedes durch Reihenschaltung von zwei Armen (Q₁, Q₂; Q₃, Q₄; Q₅, Q₆) konfiguriert ist, die aus Halbleitervorrichtungen gebildet sind; wobei
das erste Armpaar (QA1) zwischen einem ersten Gleichstromanschluss (+2E) mit dem höchsten Potenzial der Gleichstromquelle (BA1) und einem dritten Gleichstromanschluss (0) mit einem Zwischenpotenzial verbunden ist, das zweite Armpaar (QA2) zwischen dem dritten Gleichstromanschluss (0) und einem fünften Gleichstromanschluss (-2E) mit dem niedrigsten Potenzial verbunden ist,
**dadurch gekennzeichnet, dass**
das dritte Armpaar (QA3) zwischen einem Mittelpunktanschluss des ersten Armpaars (QA1) und einem Mittelpunktanschluss des zweiten Armpaars (QA2) verbunden ist und ein Mittelpunktanschluss des dritten Armpaars (QA3) als ein Ausgangsanschluss (U) dient, wobei der Inverter weiterhin Folgendes umfasst
einen ersten und einen zweiten Wechselstromschalter (SW1, SW2), die durch inverse Reihenschaltung von Halbleiterschaltern (Q₁₁, Q₁₂, Q₁₃, Q₁₄) konfiguriert sind,
wobei der erste Wechselstromschalter (SW1) zwischen einem zweiten Gleichstromanschluss (+1E) mit dem zweithöchsten Potenzial der Gleichstromquelle und dem Mittelpunktanschluss des ersten Armpaars (QA1) verbunden ist und der zweite Wechselstromschalter (SW2) zwischen einem vierten Gleichstromanschluss (-1E) mit dem vierthöchsten Potenzial der Gleichstromquelle (BA1) und dem Mittelpunktanschluss des zweiten Armpaars (QA2) verbunden ist.

2. Fünfstufiger Inverter nach Anspruch 1, wobei eine Konfiguration, bei der die Halbleiterschalter (Q₁₁, Q₁₂, Q₁₃, Q₁₄) invers in Reihe geschaltet sind, durch eine Konfiguration, bei welcher Halbleitervorrichtungen (Q₂₁, Q₂₂, Q₂₃, Q₂₄) mit inverser Stehspannung invers parallel geschaltet sind, als der erste und der zweite Wechselstromschalter (SW1, SW2) ersetzt ist.

3. Fünfstufiger Inverter, der mit fünf Gleichstromanschlüssen versehen ist und jeden Spannungspegel aus einer Eingangsgleichstromquelle (BA1) auswählen und ausgeben kann, die fünf voneinander verschiedene Spannungspegel (+2E, +1E, 0, -1E, -2E) einschließlich null aufweist,
wobei der Inverter Folgendes umfassend:
ein erstes, zweites und drittes Armpaar (QA1, QA2, QA3), von denen jeder durch Reihenschaltung von zwei Armen (Q₁, Q₂; Q₃, Q₄: Q₅, Q₆) konfiguriert ist, die aus Halbleitervorrichtungen ausgebildet sind, wobei
das erste Armpaar (QA1) zwischen einem ersten Gleichstromanschluss (+2E) mit dem höchsten Potenzial der Gleichstromquelle (BA1) und einem dritten Gleichstromanschluss (0) mit einem Zwischenpotenzial verbunden ist, das zweite Armpaar (QA2) zwischen dem dritten Gleichstromanschluss (0) und einem fünften Gleichstromanschluss (-2E) mit dem niedrigsten Potenzial verbunden ist,
**dadurch gekennzeichnet, dass**
das dritte Armpaar (QA3) zwischen einem Mittelpunktanschluss des ersten Armpaars (QA1) und einem Mittelpunktanschluss des zweiten Armpaars (QA2) verbunden ist und der Mittelpunktanschluss des dritten Armpaars (QA3) als ein Ausgangsanschluss (U) dient, wobei der Inverter weiterhin Folgendes umfasst
ein viertes Armpaar (QA4), das durch Reihenschaltung von zwei Armen (Q₇, Q₈) konfiguriert ist, die aus Halbleitervorrichtungen ausgebildet sind, und wobei das vierte Armpaar (QA4) zwischen einem zweiten Gleichstromanschluss (+1E) mit dem zweithöchsten Potenzial der Gleichstromquelle (BA1) und einem vierten Gleichstromanschluss (-1E) mit dem vierthöchsten Potenzial der Gleichstromquelle (BA1) verbunden ist;
einen Wechselstromschalter (SW3), der durch inverse Reihenschaltung von Halbleiterschaltern (Q₁₅, Q₁₆) konfiguriert ist,
wobei der Wechselstromschalter (SW3) zwischen einem Mittelpunktanschluss des vierten Armpaars (QA4) und einem Mittelpunktanschluss des dritten Armpaars (QA3) verbunden ist.

4. Fünfstufiger Inverter nach Anspruch 3, wobei eine Konfiguration, bei der die Halbleitervorrichtungen (Q₁₅, Q₁₆) invers in Reihe geschaltet sind, durch eine Konfiguration, bei welcher Halbleitervorrichtungen (Q₂₅, Q₂₆) mit inverser Stehspannung invers parallel geschaltet sind, als der Wechselstromschalter (SW3) ersetzt ist.

5. Fünfstufiger Inverter nach einem der Ansprüche 1 bis 4, wobei jeder der Arme, die das erste bis dritte Armpaar (QA1, QA2, QA3) begründen, selektiv EIN-AUS geschaltet wird und so angetrieben wird, dass nur Spannungen von zwei oder weniger Fraktionen unter den Spannungen der Gleichstromquelle während des Betriebs der Arme angelegt werden.

## Revendications

1. Inverseur à cinq niveaux muni de cinq bornes CC et capable de sélectionner et de délivrer n'importe quel niveau de tension depuis une source d'alimentation CC d'entrée (BA1) qui possède cinq niveaux de tension mutuellement différents (+2E, +1E, 0, -1E, -2E), zéro compris,
l'inverseur comprenant :
une première, une seconde et une troisième paires de bras (QA1, QA2, QA3) qui sont chacune configurées en combinant en série deux bras (Q₁, Q₂ ; Q₃, Q₄ ; Q₅, Q₆) formés de dispositifs à semi-conducteurs ; dans lequel
la première paire de bras (QA1) est reliée entre une première borne CC (+2E) qui possède le potentiel le plus élevé de la source d'alimentation CC (BA1) et une troisième borne CC (0) qui possède un potentiel intermédiaire, la seconde paire de bras (QA2) est reliée entre la troisième borne CC (0) et une cinquième borne CC (-2E) qui possède le potentiel le plus faible,
**caractérisé en ce que**
la troisième paire de bras (QA3) est reliée entre une borne intermédiaire de la première paire de bras (QA1) et une borne intermédiaire de la seconde paire de bras (QA2), et une borne intermédiaire de la troisième paire de bras (QA3) sert de borne de sortie (U), moyennant quoi
l'inverseur comprend en outre
un premier et un second commutateurs CA (SW1, SW2) configurés en reliant en série de manière inverse des commutateurs à semi-conducteurs (Q₁₁, Q₁₂, Q₁₃, Q₁₄),
dans lequel le premier commutateur CA (SW1) est relié entre une seconde borne CC (+1E) qui possède le second potentiel le plus élevé de la source d'alimentation CC et la borne intermédiaire de la première paire de bras (QA1), et le second commutateur CA (SW2) est relié entre une quatrième borne CC (-1E) qui possède le quatrième potentiel le plus élevé de la source d'alimentation CC (BA1) et la borne intermédiaire de la seconde paire de bras (QA2).

2. Inverseur à cinq niveaux selon la revendication 1, dans lequel une configuration dans laquelle les commutateurs à semi-conducteurs (Q₁₁, Q1₂, Q₁₃, Q₁₄) sont combinés en série de manière inverse est remplacée par une configuration dans laquelle les dispositifs à semi-conducteurs (Q₂₁, Q₂₂, Q₂₃, Q₂₄) qui présentent une tension de tenue inverse sont reliés en parallèle de manière inverse, comme le premier et le second commutateurs CA (SW1, SW2).

3. Inverseur à cinq niveaux muni de cinq bornes CC et capable de sélectionner et de délivrer n'importe quel niveau de tension depuis une source d'alimentation CC d'entrée (BA1) qui possède cinq niveaux de tension mutuellement différents (+2E, +1E, 0, -1E, -2E), zéro compris,
l'inverseur comprenant :
une première, une seconde et une troisième paires de bras (QA1, QA2, QA3) qui sont chacune configurées en combinant en série deux bras (Q₁, Q₂ ; Q₃, Q₄ ; Q₅, Q₆) formés de dispositifs à semi-conducteurs ; dans lequel
la première paire de bras (QA1) est reliée entre une première borne CC (+2E) qui possède le potentiel le plus élevé de la source d'alimentation CC (BA1) et une troisième borne CC (0) qui possède un potentiel intermédiaire, la seconde paire de bras (QA2) est reliée entre la troisième borne CC (0) et une cinquième borne CC (-2E) qui possède le potentiel le plus faible,
**caractérisé en ce que**
la troisième paire de bras (QA3) est reliée entre une borne intermédiaire de la première paire de bras (QA1) et une borne intermédiaire de la seconde paire de bras (QA2), et la borne intermédiaire de la troisième paire de bras (QA3) sert de borne de sortie (U), moyennant quoi
l'inverseur comprend en outre
une quatrième paire de bras (QA4) configurée en combinant en série deux bras (Q₇, Q₈) formés de dispositifs à semi-conducteurs, et la quatrième paire de bras (QA4) est reliée entre une seconde borne CC (+1E) qui possède le second potentiel le plus élevé de la source d'alimentation CC (BA1) et une quatrième borne CC (-1E) qui possède le quatrième potentiel le plus élevé de la source d'alimentation CC (BA1) ;
un commutateur CA (SW3) configuré en reliant en série de manière inverse les commutateurs à semi-conducteurs (Q₁₅, Q₁₆),
dans lequel le commutateur CA (SW3) est relié entre une borne intermédiaire de la quatrième paire de bras (QA4) et une borne intermédiaire de la troisième paire de bras (QA3).

4. Inverseur à cinq niveaux selon la revendication 3, dans lequel une configuration dans laquelle les dispositifs à semi-conducteurs (Q₁₅, Q₁₆) sont combinés en série de manière inverse est remplacée par une configuration dans laquelle les dispositifs à semi-conducteurs (Q₂₅, Q₂₆) qui présentent une tension de tenue inverse sont reliés en parallèle de manière inverse, comme le commutateur CA (SW3).

5. Inverseur à cinq niveaux selon l'une quelconque des revendications 1 à 4, dans lequel chacun des bras qui constituent la première à la troisième paires de bras (QA1, QA2, QA3) est sélectivement activé/désactivé et entraîné de sorte que seules les tensions de deux fractions ou moins, parmi les tensions de la source d'alimentation CC, soient appliquées pendant le fonctionnement des bras.
